(19) **Europäisches Patentamt / European Patent Office / Office européen des brevets**

(11) **EP 3 044 887 B1**

(12) **EUROPEAN PATENT SPECIFICATION**

(45) Date of publication and mention
of the grant of the patent:
**29.08.2018 Bulletin 2018/35**

(21) Application number: **14843478.0**

(22) Date of filing: **09.09.2014**

(51) Int Cl.:
**H04L 12/825** $^{(2013.01)}$     **H04B 10/40** $^{(2013.01)}$

(86) International application number:
**PCT/US2014/054672**

(87) International publication number:
**WO 2015/038504 (19.03.2015 Gazette 2015/11)**

(54) **HITLESS SERVICE IN A VARIABLE RATE OPTICAL TRANSPONDER**

STÖRUNGSFREIER DIENST BEI EINEM OPTISCHEN TRANSPONDER MIT VARIABLER RATE

SERVICE SANS À-COUPS DANS UN TRANSPONDEUR OPTIQUE À DÉBIT VARIABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2013   US 201361876408 P
08.09.2014   US 201414479398**

(43) Date of publication of application:
**20.07.2016   Bulletin 2016/29**

(73) Proprietor: **NEC Corporation
Tokyo 108-8001 (JP)**

(72) Inventors:
• **HU, Junqiang
  Davis, California 95616 (US)**
• **KANONAKIS, Konstantinos
  New Brunswick, New Jersey 08901 (US)**
• **WANG, Ting
  West Windsor, New Jersey 08550 (US)**
• **JI, Philip
  Cranbury, New Jersey 08512 (US)**

(74) Representative: **Betten & Resch
Patent- und Rechtsanwälte PartGmbB
Maximiliansplatz 14
80333 München (DE)**

(56) References cited:
WO-A2-01/99342          US-A- 5 471 332
US-A1- 2008 226 289     US-A1- 2009 196 602
US-A1- 2010 054 750     US-B1- 7 058 008
US-B2- 6 763 025        US-B2- 7 420 922

• WEI WEI ET AL: "Cognitive optical networks: key drivers, enabling techniques, and adaptive bandwidth services", IEEE COMMUNICATIONS MAGAZINE, IEEE SERVICE CENTER, PISCATAWAY, US, vol. 50, no. 1, 2 January 2012 (2012-01-02), pages 106-113, XP011396942, ISSN: 0163-6804, DOI: 10.1109/MCOM.2012.6122540

**Description**

**RELATED APPLICATION INFORMATION**

**BACKGROUND OF THE INVENTION**

Internet traffic varies according to at least two scales: first, because of the emergence of new applications and the increasing number of Internet users, internet traffic increases exponentially when considered over long time periods (e.g., yearly) and, second, fluctuations in usage on smaller time scales (e.g., daily) occur. When upgrading networks, carriers provide for significantly higher bandwidth than needed to: support expected traffic growth over the course of years. However, before each upgrade, carriers also require spectrum or bandwidth savings to ensure that the network will be able to operate into the future. Energy efficiency is also desirable to reduce operational costs, which in the case of power consumption will be roughly proportional to the traffic volume.

Recent technologies have improved the bandwidth efficiency of optical networks. Such technologies include optical signal to noise ratio (OSNR) adaptive modulation and Nyquist rate transponders as well as band switching in optical switches. Higher modulation formats also increase energy efficiency by reducing the symbol rate. However, these technologies are generally available only on static configurations. Whenever the network configuration-such as modulation format or symbol rate-needs to be changed, the connectivity will be temporarily interrupted and the customer will experience loss of data. Traffic-adaptive transport configuration is believed to reduce overall power consumption and to increase global network resource utilization, but the lack of hitless service provisioning prohibits the realization of these advantages.

**BRIEF SUMMARY OF THE INVENTION**

A receiver includes a variable rate transponder that provides data communications at a configurable rate. The receiver further includes a hitless service provisioning (HSP) module configured to set a new communications rate of the variable rate transponder in response to the receipt of an end of transmission (EoT) message and to trigger a resumption of communications at the new rate in response to the receipt of a start of transmission (SoT) message. The transponder receives a training pattern prior to receipt of the SoT message to train for a connection resumption

A transmitter includes a variable rate transponder that provides data communications at a configurable rate. The transmitter also includes a hitless service provisioning module configured to trigger the transmission of an end of transmission (EoT) message to set a new communications rate of the variable rate transponder, to trigger the transmission of a training pattern after setting the new communications rate, to trigger the transmission of a start of transmission (SoT) message, and to trigger a resumption of communications following transmission of the SoT message.

A method for variable rate control includes determining a new communications rate in response to measured data traffic patterns. A receive change message is transmitted to a receiver that triggers the receiver to wait for an end of transmission (EoT) message and to set a new communications rate. A transmit change message is transmitted to a transmitter that triggers the transmitter to send the EoT message to the receiver, to set the new communications rate, and to send a start of transmission (SoT) message to the receiver before resuming data communications.

**BRIEF DESCRIPTION OF THE DRAWINGS**

FIG. 1 is a block diagram of a variable rate optical communications system in accordance with the present principles.
FIG. 2 is a block/flow diagram of a method for hitless service in an optical communications system in accordance with the present principles.
FIG. 3 is a block/flow diagram of a method for hitless service in a time division multiplexing optical communications system in accordance with the present principles.
FIG. 4 is a block diagram of a centralized controller for an optical communications system in accordance with the present principles.

**DETAILED DESCRIPIION**

The invention is defined by the appended set of claims. The embodiments described below are to be regarded as example embodiments. Embodiments of the present principles provide a hitless solution doing transponder rate adjustment to avoid traffic loss. This allows frequent channel capacity tuning, which helps energy and network resource efficiency. The present embodiments use a centralized controller (CC) to coordinate a transmitter and receiver in a network. The CC first notifies the receiver to be prepared for transponder reconfiguration, and then the CC signals the transmitter to reconfigure.

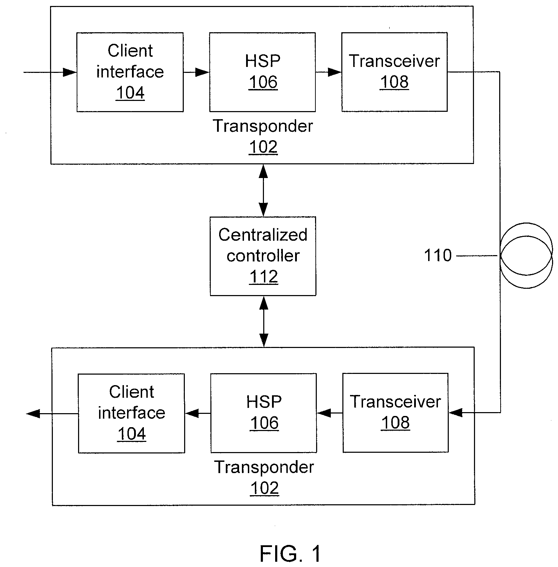

Referring now to FIG. 1, a block diagram of a network is shown. The network includes two transponders 102 that communicate over a network 110. In the present examples it the network is described as being an optical network, with optical transponders 102 and an optical fiber 110 connecting them, but it should be understood that the present principles may be applied to other types of networks as well.

Each transponder 102 includes a client interface 104 that exchanges data with a client network The client interface 104 receives, e.g., data from a network interface card and passes the data to a hitless service provisioning (HSP) module 106, which determines how to configure a variable rate optical transceiver (VROT) 108. The interface between the client interface 104 and the HSP 106 can be a framed continuous data stream, packets, or a time division multiplexing (TDM) data stream, The interface between the HSP and the VROT 108 is a data stream, such that the VROT 108 handles data to/from the HSP 106 transparently.

The VROT 108 is able to adjust transmission/reception rates while avoiding traffic loss, such that the transport rate matches the actual client traffic capacity, rather than the client line rate. By adapting to the client traffic capacity, the transponders 102 achieve both power and spectrum savings. To accomplish this, a CC 112 communicates with HSP modules 106 to coordinate rate changes. The present embodiments are applicable to both TDM and packet interfaces. Unless otherwise indicated, the term "frame" refers herein to the transmission unit of either TDM or packets.

The CC 112 may communicate with the transponders 102 through an out-ol-band control channel. When the CC 112 determines that a rate change is needed, either dynamically upon traffic change detection or according to an updated provisioning decision, the CC 112 notifies the connected transponders 102. The CC 112 notifies the receiving transponder 102 about the configuration changes and then notifies the transmitting transponder 102 to perform such changes.

In both transponders 102, hitless service is controlled by HSP 106. Upon receiving a signal from the CC 112, the transmitter-side HSP 106 appends an end-of-transmission (EoT) pattern after finishing its current transmission to notify the receiver that it is to take action. The HSP 106 at the transmitting transponder 102 then reconfigures itself using the parameters given by the CC 112 and begins transmitting a training pattern (TP) for some predefined time period. The reconfiguration time plus the training period is greater than the reconfiguration and re-synchronizing time of the receiving transponder 102. The transmitter then sends a start-of-transmission pattern followed by a regular data stream to continue the communication.

On the receiver side, the HSP 106 at the receiving transponder 102 looks for the EoT message after each frame after receiving notification from the CC 112. When the EoT pattern is detected, the HSP 106 reconfigures the receiving VROT 108 using the parameters given by the CC 112 and waits for the TP. When the TP is detected, the receiving transponder 102 enters the trained state and begins looking for SoT, after which the receiving transponder 102 begins receiving regular data.

If there are repeaters (e.g., 3R regenerators) on the link 110 between transponders 102, their operation procedure is similar to the receiver, and notification from CC 112 to the receivers happens before the transmitting transponder 102 is notified. In such a case, the CC 112 triggers a TP that is long enough for all the intermediate repeaters and the destination transponder 102 to be synchronized sequentially. EoT, TP, and SoT messages are passed through by the repeaters so that each repeater or receiver can detect the patterns.

Some embodiments may omit the CC 112. In such an embodiment, the functions of the CC 112 may be performed by the transmitting transponder 102, with notification messages being sent in-band. The transmitter may therefore have the ability to monitor traffic, whether internally or by an external monitoring module. When notified to change the optical channel capacity, the HSP 106 in the transmitting transponder 102 passes such information to the receiving transponder 102 using control messages embedded in the data stream, For packet applications, such control messages may be framed and can be differentiated from regular data packets. For TDM service there can be either additional bandwidth dedicated for control message, for example in a fixed time slot, or they may be transmitted using a field in the TDM frame header. For increased reliability, the receiver may send back an acknowledgment message to the transmitter, which would need a bidirectional communication channel.

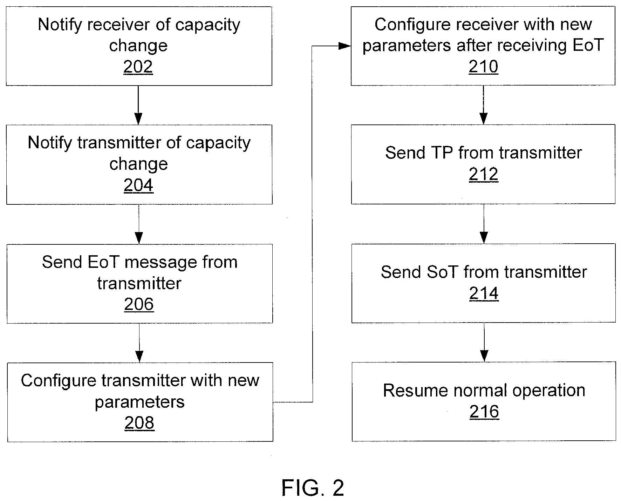

Referring now to FIG. 2, a method for hitless rate change is shown. At block 202, the CC 112 first notifies the receiving transponder 102 of a capacity change. The CC 112 then notifies the transmitting transponder 102 of the capacity change. The transponders 102 are notified in this order to ensure that the receiver will be listening for the EoT message sent by the transmitter in block 206. Block 208 then reconfigures the transmitter with the new transmission parameters. Once the receiver receives the EoT message in block 210, the receiver also reconfigures according to the parameters sent in block 202. After the transmitter is reconfigured, block 212 transmits a training pattern. After a predetermined time period, block 214 ends the TP and transmits the SoT message, When the receiver receives the SoT message, block 216 resumes normal operation.

When dealing with TDM streams, the data stream is usually encapsulated in time-delineated frames, where the timeslot of each frame identifies a flow. Typical examples of TDM technology include synchronous optical networks (SONET) and optical terminal networks (OTN). In TDM systems, a timeslot is always transmitted, no matter whether data is allocated to it or now. In the interest of power consumption and bandwidth savings, the present embodiments compress the TDM frame by removing unallocated time slows.

Thus, when changing rates in a TDM system, the CC 112 provides a new transmission schedule to the transponders that removes unused slots from an underfull TDM frame. The removed slots are replaced with data from clients that transmit traffic to keep the total frame size a constant length. The channel rate for individual client streams is therefore variable, as a stream will have a different number of slots allocated to it within the frame depending on how many other active clients there are. At the receiver side, the removed slots are stuffed and presented to the client interface 104 to maintain a constant data rate, This provides for non-adaptive clients to be used, as such clients will expect specific timing for the arrival of bits. The "stuffing" can simply be zeros, encrypted to provide a sufficient number of 0-1 transitions.

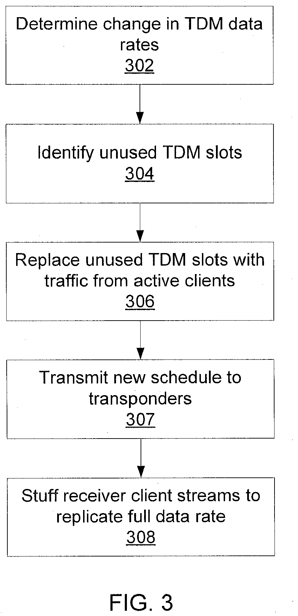

Referring now to FIG. 3, a method for adjusting the rate of a TDM stream is shown. At block 302, the CC 112 determines that the TDM stream is underfull according to current data traffic. At block 304, the CC 112 identifies unused TDM slots in the stream and flags them for removal At block 306, the CC 112 creates a new TDM schedule that replaces unused TDM slots with traffic from active clients. Block 307 transmits the new schedule from the CC 112 to the HSP modules 106 at the respective transponders 102. When the receiving transponder 102 receives the new TDM schedule, block 308 stuffs client streams to replicate the full data rate, so as to remain compliant with TDM protocol mandates.

TDM slot allocation information can be obtained and managed from a software defined network (SDN) controller or generalized multi-protocol label switching (GMPLS) controller that is responsible for TDM channel setup and tear down. In the case of an SDN controller, the SDN controller can play the role of the CC 112. In the case of a GMPLS controller, the GMPLS controller itself will not play that role alone, but can work with another controller to perform the functions of the CC 112, Whenever there is a new allocation, the system will be notified and the actual allocation happens after the aforementioned line rate adjustment completes. The release happens before the adjustment

In a TDM service, for the period after the transmitter sends the EoT in block 206 until the transmitter sends the SoT in block 214, there is no valid data being sent from the transmitter to the receiver. However, TDM services often require continuous data stream transmission without any interruption, which means the TDM frame is continuously received from the client interface 104 at the transmitter side and is continuously presented to the client interface 104 at the receiver side.

One solution is to provide data buffering and delayed output at the receiver side. When the receiver system is started and synchronized, the received frame(s) or part of a frame will be buffered before being sent out, The buffer time covers the data stream interruption during reconfiguration. The selection of the buffer time is therefore related to the initial starting bandwidth (or data rate) and the tuning steps/bandwidth, The buffer time is minimized to reduce service latency and buffering resource requirements, while still providing enough of a buffer to eliminate any possible interruption during rate changes. In one embodiment, there are a fixed number of tuning steps that correspond to different frame configurations, and each has a predefined bandwidth. For example, in a frame having sixteen slots, rates for a client may be zero (where no slots are allocated) through sixteen times the rate of a single slot (where all slots are allocated to the client).

When changing to a lower data rate, data arriving at the transmitter is merely buffered until transmission resumes. When changing to a higher data rate, however, the transmitter needs to catch up to the transmitted capacity. The transmitting transponder 102 uses the old compression method at the new data rate for the first $p$ frames, where $p$ is obtained by calculation or by explicit notification or is is controlled by the transmitter itself. The transmitter may then reduce the compression ratio when the transmitter buffer is empty.

Regardless of whether the data rate was increased or decreased, the receiver decompresses the read out frames the same way they were compressed. Because the client interface 104 of the transmitter has a constant data rate and a continuous data stream, and because the aforementioned operation in the transmitter guarantees no overflow or underflow, the receiver will not encounter overflow or underflow as long as the initial frame output delay is set correctly.

The channel bandwidth can be characterized as a set $BW[i]$, $i = 1,2, ..., n$, where $n$ is the number of different rates that can be selected and where $BW[i] > BW[j]$, $\forall i > j$, For simplicity of description, it is further assumed that there is a fixed tuning time $T$ to change from one rate to another, although this may be generalized to a variable tuning time. For the transmitter side, before sending out the EoT, a given stream is transmitted at a rate $BW[k]$. When changing to a lower rate, after configuration and sending out the SoT message, the transmitter uses a new rate $BW[k - j]$, where $1 \le j \le k - 1$. Correspondingly, for frames received before EoT, the receiver reads at data rate $BW[k]$, which is also the rate that the receiver uses during the reconfiguration period. The frames received after the SoT message will be read out at the new rate $BW[k - j]$. Thus the maximum required buffer size will be $\sum_{j=1}^{n-1} BW[j] * T + BW[1] * T$, which occurs when the system started with bandwidth $BW[n]$, is tuned step-by-step to $BW[1]$, and is then tuned to any higher bandwidth.

Consider the case where the system starts with $BW[k]$, where $k \in [1:n]$. When the system reduces bandwidth to $BW[k - f]$ ($1 \le j < k$), during the line interface interruption period, the receiver reads at a rate $BW[k]$, so the buffer capacity for a single step will be $BW[k] * T$. For this situation, $k = n$ gives the minimum buffer size needed to start from any bandwidth.

When managing a packet-based service, the packets' arrival and departure do not need to be continuous, so the only requirement is to pass packets out without accumulation in the buffer and without overflow or significant delays. For this purpose, when bandwidth reduces, actual traffic capacity is reduced before transponder bandwidth adjustment The controller 112 first reduces the traffic capacity by, e.g., controlling the connected client interface 104 at the transmitting transponder 102 and then notices the transponder 102 to reduce bandwidth. When bandwidth increases, actual traffic capacity is increased after the transponder bandwidth adjustment and after the transponder has emptied buffered packets.

It should be understood that embodiments described herein may be entirely hardware, entirely software or including both hardware and software elements. In a preferred embodiment, the present invention is implemented in hardware and software, which includes but is not limited to firmware, resident software, microcode, etc,

Embodiments may include a computer program product accessible from a computer-usable or computer-readable medium providing program code for use by or in connection with a computer or any instruction execution system. A computer-usable or computer readable medium may include any apparatus that stores, communicates, propagates, or transports the program for use by or in connection with the instruction execution system, apparatus, or device. The medium can be magnetic, optical, electronic, electromagnetic, infrared, or semiconductor system (or apparatus or device) or a propagation medium. The medium may include a computer-readable storage medium such as a semiconductor or solid state memory, magnetic tape, a removable computer diskette, a random access memory (RAM), a read-only memory (ROM), a rigid magnetic disk and an optical disk, etc.

A data processing system suitable for storing and/or executing program code may include at least one processor coupled directly or indirectly to memory elements through a system bus. The memory elements can include local memory employed daring actual execution of the program code, bulk storage, and cache memories which provide temporary storage of at least some program code to reduce the number of times code is retrieved from bulk storage during execution. Input/output or I/O devices (including but not limited to keyboards, displays, pointing devices, etc.) may be coupled to the system either directly or through intervening I/O controllers.

Network adapters may also be coupled to the system to enable the data processing system to become coupled to other data processing systems or remote printers or storage devices through intervening private or public networks. Moderns, cable modern and Ethernet, cards are just a few of the currently available types of network adapters.

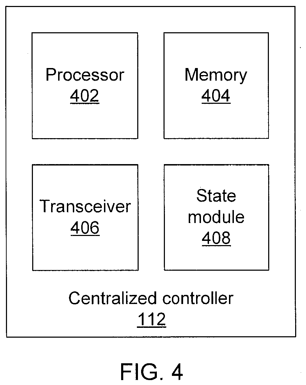

Referring now to FIG. 4, a diagram of the CC 112 is shown. The CC 112 includes a processor 402, memory 404, and a transceiver 406. A state module 408 works in conjunction with the memory to maintain the present state of the optical communications system based on updated information provided by the transceiver 406. Based on the information maintained by state module 408, the processor 402 determines whether current conditions indicate that the communications rate should be changed. If a change is needed, the processor 402 instructs the transceiver 406 to send the above-described messages to the transponders 102 and causes state module 408 to update the state of the system in memory 404.

The foregoing is to be understood as being in every respect illustrative and exemplary, but not restrictive, and the scope of the invention disclosed herein is not to be determined from the Detailed Description, but rather from the claims as interpreted according to the full breadth permitted by the patent laws. Additional information is provided in Appendix A to the application. It is to be understood that the embodiments shown and described herein are only illustrative of the principles of the present invention and that those skilled in the art may implement various modifications without departing from the scope and spirit of the invention. Those skilled in the art could implement various other feature combinations without departing from the scope and spirit of the invention.


**Additional Information**

Internet traffic varies significantly by two factors: 1) because of the emergence of new applications and the increasing number of Internet users, year-by-year the Internet traffic volume grows exponentially; 2) on smaller scale, like on daily basis, the Internet traffic varies on different time period. For investment preservations, when upgrading the network, the carriers always put much higher bandwidth than needed and may satisfy customers' need for years; while before each next upgrading, the carriers also require spectrum or bandwidth savings to have the network last for longer time. Energy efficiency is also desirable to reduce operational cost, which in the ideal case the power consumption will be proportional to the traffic volume rather than equipment or network capacity.

Recent innovations make the optical network more bandwidth efficient. Technologies to enable such efficiency include OSNR adaptive modulation and Nyquist rate at transponders, band switching in optical switches, and so on. Higher modulation format also increases energy efficiency because of reduced symbol rate. However, these technologies on transponders are mostly for static configurations. That is, whenever the configuration (like modulation format and/or symbol rate) needs to be changed, the connectivity will be temporarily interrupted, and the customer will encounter packets loss. Traffic-adaptive transport configuration is believed to reduce overall power consumption and increase global network resource utilization, but the lack of hitless service provisioning prohibits the realization of such advantages.

The present invention is to provide a hitless solution during transponder rate adjustment to avoid traffic loss. This will allow frequent channel capacity tunings which helps energy and network resource efficiency.

So far no other solutions are available.

In one embodiment, the present invention uses centralized controller (CC) to coordinate the transmitter and receiver. The CC first notifies the receiver to be prepared for transponder re-configuration; then it signals the transmitter to reconfigure.

When transmitter receives such signal, after finishing the transmission of current frame (i.e., the transmission unit for either TDM or packet interface), it adds an end-of-transmission (EoT) pattern to the data stream, then reconfigures and sends training pattern (TP) for predefined period. Such predefined period plus the transmitter reconfiguration period is larger than the receiver reconfiguration and resynchronization time to ensure that the receiver can detect SoT pattern. Then it sends an SoT (start-of-transmission) pattern to start regular data transmission.

For receiver side, when it receives the notice from CC, besides the regular data receiving procedure, it looks for EoT pattern. Once EoT is received, the receiver changes to the new settings that were instructed by the CC and uses the new settings to receive data. Then it enters TRAINED state by detecting TP. In TRAINED state, when SoT is detected, the receiver enters regular receiving state.

In one embodiment, the transceivers use embedded handshaking messages to notify each other about configuration changes. First the transmitter sends "To be Alarmed" message with the parameters it is going to use; upon detection of "To be Alarmed", the receiver responses with "Alarmed" message. Then the receiver checks for EoT; upon detection, it configures with the new parameters and then works the same procedure as above. For transmitter, upon detection of "Alarmed" message, it sends out "EoT" and performs reconfiguration, then follow the same procedure as the aforementioned solution with CC.

For system supporting TDM services, first there is TDM frame compression method that removes the unallocated time slots during transmission, to enable lower transmission rate. After system started and upon detection of start-of-frame, the receiver delays outputting the frames to compensate the interruption period it will encounter during reconfiguration, so that the known interruption period can always be covered and provide the customer hitless service. Once the system is in service, if the bandwidth is to be increased, after reconfiguration the transmitter first uses original compression method (higher compression rate) to empty its buffer, and then changes to new compression method; if bandwidth is reduced, after reconfiguration the transmitter immediately uses new compression method.

The present invention enables hitless service delivery during transponder reconfiguration. This feature makes traffic or link-adaptive configuration feasible which further enables spectrum and energy efficiency.

**Overall description**

The present invention is about an optical transponder 102/122 located between client network 112/114 and optical transport network 110, as illustrated in Fig. 1. Inside transponder 102, there is client interface (CI) 104, hitless service provisioning (HSP) module 106, and variable rate optical transceiver (VROT) 108. This optical transponder is able to adjust the rate of VROT 108 while avoid traffic loss, so that the transport rate can match the actual client traffic capacity, rather than the client line rate. In addition, by adapting to the client traffic capacity, transponder 102/122 can achieve both power and spectrum savings.

Fig. 1 Network level illustration of the present invention

The interface between 104 and 106 can be either framed continuous data stream like CAUI, or service interface like packets or TDM data stream. The interface between 106 and 108 is data stream, which means 108 handles the data from/to 106 transparently.

The following description mainly focuses on block 106, though the embodiments can also be applied to the case that 106 is integrated with block 108, in that 108 has capability to understand the data transmitted. To simplify the description, the following assumes 106 and 108 are separate and 108 provides transparent service interface.

The present invention is applicable to both TDM and packet interface. Unless mentioned explicitly, the term "frame" refers to the transmission unit of both TDM and packet.

**Transmitter and receiver coordination**

In one embodiment, the transponders are controlled by a centralized controller 116 through out-of-band control channel such as 124 and 126. When controller 116 decides to change the rate (either dynamically upon traffic change detection or according to an updated provisioning decision), it notifies the connected transponders with the following procedure: first notify receiver about the configuration changes, and get receiver prepared; then notify the transmitter to perform such changes.

In both transmitter and receiver, hitless service is achieved by HSP 106. Upon receiving the signaling from controller 116, after finishing the current transmission, HSP 106 in transmitter side appends an End-of -Transmission (EoT) pattern to notify the receiver that it will take action. Then the transmitter system reconfigures itself using the parameters given by controller 116. and start transmitting training pattern (TP) for some pre-defined period $T_{tr}$. The reconfiguration time plus the training period $T_{tr}$ is greater than the reconfiguration and re-synchronizing time in the receiver. Then transmitter sends out Start-of-Transmission (SoT) pattern followed by regular data stream to continue the communication. The transmitted data sequence is shown in Fig. 2.

Fig. 2 Transmitted data sequence (from 106 to 108 in transmitter)

For receiver side, upon receiving of the signaling from controller 116, besides the regular receiving operation, it looks for EoT after each frame. When such pattern is detected, it reconfigures using the given parameters and starts to search for TP. When TP is detected, it enters TRAINED state and begins looking for SoT. When SoT is detected, it starts the receiving of regular data.

Fig. 3 gives the flow chart of the coordinated operation.

Fig. 3 Centralized controller, transmitter, and receiver operating flow chart

When there are repeaters (e.g., 3R regenerators) between the connected transponders, their operation procedure is similar to receiver, and the notification happens before the source node (transmitter) is notified. Training pattern shall be long enough for all the intermediate repeaters and the destination receiver to be synchronized sequentially. EoT, TP, and SoT messages shall be passed through by the repeaters so that each next repeater or receiver can detect these patterns.

For applications without centralized controller, one embodiment is using in-band message generated from the transmitter. In such case, a typical way for the systems to know traffic capacity change is by connecting the transmitter to an external traffic monitoring module, or by talking with the port that the transmitter is connected to. When notified to change the optical channel capacity, block 106 in transmitter passes such information to the receiver using control message embedded in the data stream. For packet applications, such control message may be framed and can be differentiated with regular data packets; for TDM services, there can be either additional bandwidth dedicated for control message (e.g., in fixed timeslot), or using particular field in the TDM frame header. For increased reliability, the receiver may send back an ACK message to the transmitter, which means bidirectional communication channel is needed. Except for message interaction between the transmitter and receiver, their internal processing follow the same procedure as the aforementioned case with centralized controller.

## TDM traffic compression

TDM service usually has the data stream encapsulated in frames, and use timeslot inside each frame to identify a flow. The typical examples of such TDM technology are SDH/SONET and OTN. A timeslot is always transmitted no matter it is allocated or not. For power consumption and bandwidth savings, one embodiment is to compress the TDM frame by removing the unallocated time slots.

(a) Standard OTU3 frame and tributary slot (prior art)

(b) OTU3 frame with unallocated tributary slots removed

Fig. 4 (a) OTU3 tributary slots used when carrying one ODU2 and (b) the corresponding frame compression

Fig. 4(a) is the illustration for OPU3 tributary slots in OTU3 frame. Each OTN frame has 4 rows and 3824 columns of bytes. Columns 1~16 are the frame header for OTN/ODU/OPU overhead; column 17 to 3824 are divided into 16 tributary slots to carry TDM data stream. In the example shown in the figure, the shaded slots (1~4) are allocated for ODU2, and others are unallocated. Though no information is carried in slots 5~16. they are still transmitted, so the channel has constant data rate. For spectrum and power efficiency, in one embodiment, the unallocated tributary slots are not transmitted. For the allocation in Fig. 4(a), the frame format after compression becomes that in Fig. 4(b). Such removal of unallocated time slots leads to variable channel rate. Note that the frame time duration remains the some in both cases. At receiver side, the removed slots will be stuffed and presenting constant data rate to the client interface.

The information about TDM slot allocation can be obtained for example from GMPLS controller or SDN controller whichever is responsible for TDM channel setup/tear down. Whenever there is new allocation or release, the system will be notified and the actual allocation happens after the aforementioned line rate adjustment completes while the release happens before the adjustment.

## Hitless TDM service provisioning

As shown in the flow chart in Fig. 3, for the period after EoT is sent and before the next SoT, there is no valid data from transmitter to receiver. However, TDM service requires continuous data stream transferring without any interruption, which means the TDM frame will be continuously received from client interface at the transmitter (source) side and shall be presented continuously to the client interface at the receiver (destination) side.

Fig. 5 Receiver system block diagram for delayed outputting

One solution for this problem is through data buffering and delayed outputting at receiver side. When the receiver system is started and synchronized, the received frome(s) or part of a frame will be buffered before sent out. The block diagram for the receiver to support such delayed outputting is shown in Fig. 5. This buffering time is to cover the data stream interruption during reconfiguration. The selection of buffering time is related to the initial starting bandwidth (or data rate, interchangeably used in this description) and the tuning steps/bandwidth. It shall be minimized to reduce the service latency and buffering resource, while enough to eliminate any possible interruption. In one embodiment, there are fixed number of tuning steps and each has pre-defined bandwidth. For the example of OTU3, the rates may be those with 0 (no time slot allocated) through 16 (all time slots allocated) tributary slots.

Assume the channel bandwidth can be selected within $\{BW[i], i = 1, 2, ..., n\}$, where n is the number of rates that can be selected, and $BW[i] > BW[j]$ when $i > j$; to simplify the description, further assume fixed tuning time $T_i$ to change from one rate to another, though this can be variable for general cases. For transmitter side, before sending out EoT, it transmits at rate $BW[k]$; when changing to a lower rate, after reconfiguration and sending out SoT, it uses the new rate $BW[k-j]$ where $1 \le j \le k$ - 1. Correspondingly, for frames received before EoT, the receiver reads at data rate $BW[k]$, which is also the rate the receiver uses during reconfiguration period: the frames received after SoT will be read out at new rate $BW[k - j]$. Note that in transmitter, because there is the period when no data transmitted, the frame(s) or part of a frame received in this period will be buffered, which means frame transmission to the line interface has larger delay than during higher bandwidth case. When changing to higher data rate, things are different because the transmitter needs to catch up the transmitted capacity, or say is expected to clear up its buffer. Still assume it uses transmission rate $BW[k]$ before sending out EoT, and after reconfiguration and SoT, the transmission rate changes to $BW[k+j]$ where $1 \le j \le n$ - k. Then for the first p frames after SoT, the transmitter uses old compression method but new data rate. The number of frames p can be obtained by calculation, or explicit notification (like through SDN controller), or controlled by the transmitter in that it inserts a control frame after the first p frames to notify the receiver changing to new compression/stuffing method. In one embodiment, the transmitter first frees its buffer after changing to higher data rate, by using old compression rate but new transmission rate, and only when the transmitter buffer reaches empty, it reduces the compression ratio. In such case, the maximum required buffer size will be $\sum_{j=1}^{n-1} BW[j] * T_i + BW[1] * T_i$, which happens when system started with bandwidth $BW[n]$, tuned step-by-step to $BW[1]$, and then tuned to any higher bandwidth.

Fig. 6 Frame compression and line transmission when increasing bandwidth (R2>R1)

| ··· | Frame #*i*-1 | Frame #*i*-2 | | Frame #*i* | Frame #*i*+1 | Frame #*i*+1 | ··· | → *t* |

Compression for rate $R_1$, transmit at rate $R_1$     Reconfiguration period     Compression for rate $R_2$, transmit at rate $R_2$

Fig. 7 Frame compression and line transmission when reducing bandwidth (R2<R1)

Either increasing or decreasing the bandwidth, the receiver decompresses the read out frames following the same way they were compressed. Because transmitter client interface has constant data rate and continuous data stream, and the aforementioned operation in transmitter guarantees no overflow or underflow, the receiver client side will not encounter overflow or underflow either, if the initial frame outputting delay is set correctly.

Suppose the system starts with $BW[k]$, where $k \in [1:n]$. When the system reduces bandwidth to $BW[k - j]$ ($1 \leq j < k$), during the line interface interruption period, the receiver reads at rate $BW[k]$, so the buffer capacity for a single step will be $BW[k] * T_t$. The receiver shall be able to accommodate the worst case which is that each step changes to its next lower capacity (for example, $BW[k]$ changed to $BW[k - 1]$), and for the first step changing to higher bandwidth. With the aforementioned transmitter operation, the buffer size required to guarantee this operation will be

$\sum_{j=1}^{k} BW[j] * T_t.$ From this equation, $k=n$ gives the minimum required buffer size to start from any bandwidth.

## Hitless packet service provisioning

For packet service, the packets arrival or departure does not need to be continuous, so the only requirement is to have the packets passed out without accumulation in the buffer and cause overflow or significant delay. For this purpose, when bandwidth reduces, actual traffic capacity shall be reduced before transponder bandwidth adjustment. That is, the SDN controller first reduces the traffic capacity (by controlling the connected client interface in the transponder Tx side, or all the way to the traffic source), and then notifies the transponder to reduce the bandwidth. When bandwidth increases, actual traffic capacity shall be increased after transponder bandwidth adjustment, and after the transponder has emptied the buffered packets. This procedure is shown in Fig. 8 and Fig. 9, from SDN controller's perspective. Alternatively, methods like manual configuration or through network management software can be used as long as follow the aforementioned procedure.

Fig. 8 Control procedure when reducing bandwidth, for packet service

Fig. 9 Control procedure when increasing bandwidth, for packet service

1b. - If possible, please provide a claim tree or diagram starting from a main claim showing progression from broadest inventive features to lower level detailed features that you think should be protected (patent counsel can assist, if needed).

1. An optical communication system that has:

- Client interface, to send or receive client traffic
- Variable rate transponder, that is able to provide different transmission data rate
- Hitless service provisioning module, that is able to avoid traffic loss

This system together with its connected peer system are capable of changing to different transmission rate based on traffic capacity while avoid traffic loss.

1.1. The variable rate transponder has a transmitter and receiver; the transmitter and its peer receiver work under matched parameter set, like modulation format, symbol rate, etc.

1.1.1. When rate is to be adjusted, the parameters used in the transmitter and its peer receiver will be tuned to the matched new set

1.1.2. The transmitter uses the following procedure when rate is about to change:

- Use ending sequence to notify the receiver about the end of using old configuration
- Re-configure with new parameter set
- Send training pattern to have receiver ready to receive data
- Send start sequence to notify the receiver about the start of communication under new configuration

1.1.3. The receiver uses the following procedure when rate is about to change:

- Enter alarmed state when the system is about to change to new configuration
- Change to new configuration when ending sequence is detected

12

- Get synchronized with training pattern, then look for start pattern
- Upon detection of start pattern, enter normal communication state

1.1.3.1. In alarm state, the receiver continues receiving with old configuration, and tries to catch the ending sequence generated by transmitter

1.1.4. When repeater is used between the transmitter and receiver, the repeater follows the same procedure to perform reconfiguration as the receiver

1.2. The systems are controlled by a centralized SDN controller

1.2.1. The SDN controller first notifies the receiver about the parameter change, to have the receiver get ready, and then notifies the transmitter to take the action

1.3. The transmitter uses embedded message to notify its peer receiver about parameter change

1.3.1. For TDM service, the transmitter use fixed time slot for the embedded message

1.3.2. For TDM service, the transmitter use dedicated field in the header for the embedded message

1.3.3. The receiver sends back ACK to the transmitter, so that the transmitter knows receiver is ready

1.4. The client interface provides continuous and constant rate TDM service

1.4.1. The destination side client interface uses delayed outputting after first data is received from line interface

1.4.1.1. The delayed outputting can have the buffer filled to a level that can avoid underflow

1.4.2. The TDM service is framed, and the payload is divided into multiple time slots

1.4.2.1. Unused timeslots are received at source side client interface, but removed by transponder for line transmission; destination side re-inserts the unused timeslots and passes the complete frame to client interface

1.4.2.1.1. When line rate reduces, after reconfiguration the transmitter immediately compresses with the newly allocated time slots which has lower bandwidth than previous

1.4.2.1.2. When line rate increases, after reconfiguration the transmitter continuously compresses the frame with previous time slots allocation, until the transmitter buffer reaches a certain low level or empty, or after pre-defined number of frames

1.4.2.1.3. Receiver follow same method as transmitter side to reinsert the unallocated timeslots

1.4.2.1.4. Slots map is obtained from TDM allocation controller like GMPLS controller; transmitter and receiver have consistent view about such allocation

1.5. The client interface provides packet service

1.5.1. When increasing line rate, the transponders' line rate is first adjusted before increasing the client interface traffic capacity

1.5.2. When reducing line rate, the client interface traffic capacity is first reduced before adjusting the transponders' line rate

1.5.3. The control is through centralized SDN controller, or other management software, or manual configuration

The following items are new and different:

1) A flexible rate transponder with the capability to provide hitless service for both TDM and packet services

2) The rate adjustment procedure, in that the transmitter first sends ending sequence to indicate the end of communication through previous settings; modifies the configuration; sends training pattern to have the receiver synchronized; sends start sequence to indicate the start of communication under new settings

3) TDM compression scheme, in that the unallocated slots are removed at source node transmitter, to reduce line rate; then inserted at the receiver and passed to the client interface

4) Delayed outputting in destination transponder, for TDM service, to have the buffer filled to the level to avoid underflow

5) The procedure for increasing the bandwidth, in that line transmission works with new rate, but TDM compression uses old (lower) rate, to empty the transmitter buffer

6) The procedure of controlling the transponders and client interface, in that client capacity is reduced before line rate tunes lower, and client capacity increases after line rate tunes higher

what is known and/or ii) that solve an important problem in the art.

The key feature is that the transponder can use variable rate to save both energy and spectrum, while the client interface can still work at continuous rate and receive hitless service.

Steps for transmitter/receiver to coordinate:

1) Receiver got notified that the transmission will use new configurations, so it continues the receiving operation while looks for ending pattern

2) Transmitter sends ending pattern, and then starts configuration with new parameters

3) Upon detection of ending pattern, the receiver reconfigures with new parameters, and then tries to get synchronized with transmitter

4) Transmitter sends training pattern to have receiver synchronized

5) After getting synchronized, the receiver looks for start pattern

6) Transmitter sends start pattern, followed by regular communication to work with new rate

7) Receiver detects start pattern and then enters the mode of regular communication using the new rate

Key items for providing variable rate, hitless TDM service:

1) TDM frame compression: unallocated time slots are removed from the frame in line transmission, and re-inserted at receiver side to deliver to client interface. The compression is only for unallocated time slots; frame header and allocated time slots are all reserved

2) Line receiver uses delayed outputting to fill its buffer, to avoid service interruption during reconfiguration period

3) When increasing the bandwidth, after reconfiguration, line transmitter first uses previous compression rate for frame compression, while transmits at new data rate, until its buffer got emptied: then it takes new compression rate

## Claims

1. A receiver, comprising:

   a variable rate transponder (102) that is configured to provide data communications at a configurable rate; and
   a hitless service provisioning, HSP, module (106) configured to:

      receive, from a centralized controller (112), a capacity change notification message that triggers the receiver to wait for an end of transmission, EoT, message sent by a transmitter and to set a new communications rate;
      set the new communications rate of the variable rate transponder (102) in response to the receipt of the EoT message; and
      trigger a resumption of communications at the new rate in response to the receipt of a start of transmission, SoT, message,

   wherein the transponder (102) is configured to receive a training pattern prior to a receipt of the SoT message to train for a connection resumption;
   wherein the HSP module is further configured to set the new communications rate based on received instructions from the centralized controller (112).

2. The receiver of claim 1, wherein the HSP module (106) is configured to receive the instructions on an out-of-band channel different from that on which the variable rate transponder (102) operates.

3. The receiver of claim 1, wherein the HSP module (106) is configured to receive the instructions on an in-band channel that the transponder (102) uses for data communications.

4. The receiver of claim 10, wherein the HSP module receives the instructions prior to reception of the EoT message.

5. A transmitter, comprising:

   a variable rate transponder (102) that is configured to provide data communications at a configurable rate; and
   a hitless service provisioning, HSP, module (106) configured to:

receive, from a centralized controller (112), a capacity change notification message that triggers the transmitter to send an end of transmission, EoT, message to a receiver, to set a new communications rate, and to send a start of transmission, SoT, message to the receiver before resuming data communications; trigger the transmission of the EoT message; set the new communications rate of the variable rate transponder (102); trigger the transmission of a training pattern after setting the new communications rate of the variable rate transponder (102); trigger the transmission of the SoT message; and trigger a resumption of communications following transmission of the SoT message; wherein the HSP module is further configured to set the new communications rate based on received instructions from the centralized controller (112).

6. The transmitter of claim 5, wherein the HSP module is further configured to:
receive the instructions on an out-of-band channel different from that on which the variable rate transponder (102) operates.

7. The transmitter of claim 5, wherein the HSP is further configured to determine the new communications rate and to trigger the transmission of the new communications rate on an in-band channel that the transponder (102) uses for data communications, or
wherein the HSP is further configured to continue the transmission of the training pattern for a duration that exceeds an expected time of receiver reconfiguration.

8. A method for variable rate control, comprising:

determining, by a centralized controller, a new communications rate in response to measured data traffic patterns;
transmitting (202), by the centralized controller, a receive capacity change notification message to a receiver that triggers the receiver to wait for an end of transmission, EoT, message sent by a transmitter and to set a new communications rate based on received instructions from the centralized controller (112); and
transmitting (204), by the centralized controller, a transmit capacity change notification message to the transmitter that triggers the transmitter to send (206) the EoT message to the receiver, to set the new communications rate based on received instructions from the centralized controller (112), and to send (214) a start of transmission, SoT, message to the receiver before resuming data communications.

9. The method of claim 8, wherein the capacity change notification message includes a new time division multiplexing, TDM, schedule that replaces empty TDM slots with traffic from active clients.

10. The method of claim 9, further comprising stuffing client streams at the receiver to maintain a constant data rate in TDM traffic.

11. The method of claim 8, wherein transmitting the capacity change notification message to the transmitter and receiver comprises transmitting on an out-of-band channel different from that on which the transmitter and receiver communicate with one another.

12. The method of claim 8, wherein the receive capacity change notification message is transmitted before the transmit capacity change notification message.

13. The method of claim 8, further comprising buffering data before enacting a communication rate change to provide uninterrupted service.

14. The method of claim 8, further comprising:

compressing frames at the transmitter with newly allocated TDM slots immediately if the newly allocated time slots have a lower bandwidth; and
compressing frames at the transmitter with previously allocated TDM slots until a buffer empties if the newly allocated time slots have a higher bandwidth.

**Patentansprüche**

1.  Ein Empfänger, umfassend:

    einen Transponder (102) mit variabler Rate, der konfiguriert ist, um Datenkommunikation mit einer konfigurierbaren Rate bereitzustellen; und
    ein Hitless Service Provisioning, HSP, Modul (106) konfiguriert zu:

    von einer zentralen Steuerung (112) eine Kapazitätsänderungsbenachrichtigung empfangen, die den Empfänger veranlasst, auf das Ende der Übertragung, EoT, der von einem Sender gesendeten Nachricht zu
    warten und eine neue Kommunikationsrate einzustellen;
    die neue Kommunikationsrate des Transponders mit variabler Rate (102) als Antwort auf den Empfang der
    EoT-Nachricht einzustellen; und
    eine Wiederaufnahme der Kommunikation mit der neuen Rate als Reaktion auf den Empfang einer Sendeanfangsmeldung, SoT, auslösen,
    wobei der Transponder (102) so konfiguriert ist, dass er ein Trainingsmuster vor einem Empfang der SoT-
    Nachricht empfängt, um für eine Wiederaufnahme der Verbindung zu trainieren;
    wobei das HSP-Modul weiterhin konfiguriert ist, um die neue Kommunikationsrate basierend auf empfangenen Befehlen von der zentralen Steuerung (112) einzustellen.

2.  Empfänger nach Anspruch 1, wobei das HSP-Modul (106) so konfiguriert ist, dass es die Anweisungen auf einem
    Out-of-Band-Kanal empfängt, der sich von dem unterscheidet, auf dem der Transponder (102) mit variabler Rate
    arbeitet.

3.  Empfänger nach Anspruch 1, wobei das HSP-Modul (106) so konfiguriert ist, dass es die Anweisungen auf einem
    In-Band-Kanal empfängt, den der Transponder (102) für die Datenkommunikation verwendet.

4.  Empfänger von Anspruch 12, wobei das HSP-Modul die Anweisungen vor dem Empfang der EoT-Nachricht erhält.

5.  Ein Sender, umfassend:

    einen Transponder (102) mit variabler Rate, der konfiguriert ist, um Datenkommunikation mit einer konfigurierbaren Rate bereitzustellen; und
    ein Hitless Service Provisioning, HSP, Modul (106) konfiguriert zu:

    von einer zentralen Steuereinheit (112) eine Kapazitätsänderungsbenachrichtigung empfangen, die den
    Sender veranlasst, eine EoT-Nachricht an einen Empfänger zu senden, eine neue Kommunikationsrate
    einzustellen und eine SoT-Nachricht an den Empfänger zu senden, bevor die Datenkommunikation wieder
    aufgenommen wird;
    die Übertragung der EoT-Nachricht auslösen;
    die neue Kommunikationsrate des Transponders mit variabler Rate (102) einstellen;
    die Übertragung eines Trainingsmusters auslösen, nachdem die neue Kommunikationsrate des Transponders mit variabler Rate (102) eingestellt wurde;
    die Übertragung der SoT-Nachricht auslösen; und
    eine Wiederaufnahme der Kommunikation nach der Übertragung der SoT-Nachricht auslösen;
    wobei das HSP-Modul weiterhin konfiguriert ist, um die neue Kommunikationsrate basierend auf empfangenen Befehlen von der zentralen Steuerung (112) einzustellen.

6.  Der Sender nach Anspruch 5, wobei das HSP-Modul weiter konfiguriert ist:
    die Anweisungen auf einem Out-of-Band-Kanal empfangen, der sich von dem unterscheidet, auf dem der Transponder (102) mit variabler Rate arbeitet.

7.  Sender nach Anspruch 5, wobei der HSP ferner so konfiguriert ist, dass er die neue Kommunikationsrate bestimmt
    und die Übertragung der neuen Kommunikationsrate auf einem In-Band-Kanal auslöst, den der Transponder (102)
    für die Datenkommunikation verwendet, oder wobei der HSP weiter konfiguriert ist, um die Übertragung des Trainingsmusters für eine Dauer fortzusetzen, die eine erwartete Zeit der Rekonfiguration des Empfängers überschreitet.

8.  Verfahren zur Steuerung der variablen Rate, umfassend:

Bestimmung einer neuen Kommunikationsrate durch eine zentrale Steuerung als Reaktion auf gemessene Datenverkehrsmuster;

Senden (202) einer Empfangskapazitätsänderungsbenachrichtigung durch die zentrale Steuereinheit an einen Empfänger, die den Empfänger veranlasst, auf ein Ende der Übertragung, EoT, einer von einem Sender gesendeten Nachricht zu warten und eine neue Kommunikationsrate basierend auf empfangenen Anweisungen von der zentralen Steuereinheit (112) einzustellen; und

Senden (204) einer Sendekapazitätsänderungsbenachrichtigung an den Sender, die den Sender veranlasst, die EoT-Nachricht an den Empfänger zu senden (206), die neue Kommunikationsrate auf der Grundlage empfangener Befehle von der zentralen Steuerung (112) einzustellen und vor der Wiederaufnahme der Datenkommunikation eine SoT-Nachricht an den Empfänger zu senden (214).

9. Verfahren nach Anspruch 8, wobei die Kapazitätsänderungsbenachrichtigung einen neuen Zeitmultiplex, TDM, Zeitplan enthält, der leere TDM-Slots durch Datenverkehr von aktiven Clients ersetzt.

10. Verfahren nach Anspruch 9, das ferner das Füllen von Client-Streams am Empfänger umfasst, um eine konstante Datenrate im TDM-Verkehr aufrechtzuerhalten.

11. Verfahren nach Anspruch 8, wobei das Senden der Kapazitätsänderungsbenachrichtigung an den Sender und Empfänger das Senden auf einem Out-of-Band-Kanal umfasst, der sich von dem unterscheidet, auf dem Sender und Empfänger miteinander kommunizieren.

12. Verfahren nach Anspruch 8, wobei die Empfangskapazitätsänderungsbenachrichtigung vor der Sendekapazitätsänderungsbenachrichtigung gesendet wird.

13. Verfahren nach Anspruch 8, ferner umfassend das Puffern von Daten, bevor eine Änderung der Kommunikationsrate durchgeführt wird, um einen ununterbrochenen Dienst bereitzustellen.

14. Verfahren nach Anspruch 8, ferner umfassend:

das Komprimieren von Frames am Sender mit neu zugewiesenen TDM-Slots sofort, wenn die neu zugewiesenen Zeitschlitze eine geringere Bandbreite haben; und

Komprimieren von Frames am Sender mit zuvor zugewiesenen TDM-Slots, bis ein Puffer leer ist, wenn die neu zugewiesenen Zeitschlitze eine höhere Bandbreite haben.

**Revendications**

1. Récepteur, comprenant:
un transpondeur à débit variable (102) qui est configuré pour fournir des communications de données à un débit configurable; et
un module de service frappé de provisionnement, HSP (106) configuré pour:

recevoir, d'un contrôleur centralisé (112), un message de notification de changement de capacité qui déclenche le récepteur pour attendre la fin d'une transmission, EoT, message envoyé par un émetteur et de définir un nouveau débit de communication;
définir le nouveau débit de communication du transpondeur à débit variable (102) en réponse à la réception du message EoT; et
déclencher une reprise des communications au nouveau débit en réponse à la réception du début de transmission, SoT, message,
dans lequel le transpondeur (102) est configuré pour recevoir un motif d'apprentissage avant une réception du message SoT pour s'entraîner pour la reprise de la connexion;
dans laquelle le module HSP est en outre configuré pour définir le nouveau débit de communication sur la base des instructions reçues de la commande centralisée (112).

2. Récepteur selon la revendication 1, dans lequel le module HSP (106) est configuré pour recevoir les instructions sur un canal hors bande différent de celui sur lequel fonctionne le transpondeur à débit variable (102).

3. Récepteur selon la revendication 1, dans lequel le module HSP (106) est configuré pour recevoir les instructions sur un canal en bande que le transpondeur (102) utilise pour des communications de données.

**4.** Récepteur selon la revendication 10, dans lequel le module HSP reçoit les instructions avant la réception du message EoT.

**5.** Emetteur, comprenant:

un transpondeur à débit variable (102) qui est configuré pour fournir des communications de données à un debit configurable; et
un module de service frappé de provisionnement, HSP, (106) configuré pour:

recevoir, d'un contrôleur centralisé (112), un message de notification de changement de capacité qui déclenche l'émetteur pour envoyer une fin de transmission, EoT, message à un récepteur, pour définir un nouveau débit de communication, et pour envoyer un début de transmission, SoT, message au récepteur avant de reprendre des communications de données;
déclencher la transmission du message EoT;
définir le nouveau débit de communication du transpondeur à débit variable (102);
déclencher la transmission d'un motif d'apprentissage après la mise en place le noveau débit de communication du transpondeur à débit variable (102);
déclencher la transmission du message de SoT; et
déclencher une reprise des communications à la suite de la transmission de la SoT message;
dans laquelle le module HSP est en outre configuré pour définir le nouveau débit de communication en base des instructions reçues de la commande centralisée (112).

**6.** Emetteur selon la revendication 5, dans lequel le module HSP est en outre configuré pour:
recevoir les instructions sur un canal hors-bande différent de celui sur lequel l'appareil le transpondeur à débit variable (102) fonctionne.

**7.** Emetteur selon la revendication 5, dans lequel le HSP est en outre configuré pour déterminer le nouveau débit de communication et pour déclencher la transmission du nouveau débit de communication sur un canal en bande que le transpondeur (102) utilise pour les communications de données, ou bien
dans laquelle le HSP est en outre configuré pour continuer la transmission du motif d'apprentissage pendant une durée qui dépasse une durée prévue de reconfiguration du récepteur.

**8.** Procédé de commande à débit variable, comprenant:

déterminer, par un contrôleur centralisé, un nouveau débit de communication en réponse aux modèles de trafic de données mesurées;
transmettre (202), par le contrôleur centralisé, un message de notification de changement de capacité de réception à un récepteur qui déclenche le récepteur pourattendre la fin de la transmission, EoT, message envoyé par un émetteur et à définir un nouveau débit de communication basé sur les instructions reçues du contrôleur centralisé (112); et
transmettre (204), par le contrôleur centralisé, un message de notification de changement de capacité d'émission à l'émetteur qui déclenche l'émetteur pour envoyer (206) le message EoT au récepteur, pour définir le nouveau débit de communication sur la base des instructions reçues du contrôleur centralisé (112), et pour envoyer (214) un début de transmission, SoT, message au récepteur avant de reprendre des communications de données.

**9.** Procédé selon la revendication 8, dans lequel le message de notification de changement de capacité inclut un nouveau multiplexage temporel, TDM, programme qui remplace les créneaux TDM vides par du trafic provenant de clients actifs.

**10.** Procédé selon la revendication 9, comprenant en outre le bourrage des flux de clients au récepteur pour maintenir un débit de données constant dans le trafic TDM.

**11.** Procédé selon la revendication 8, dans lequel la transmission du message de notification de changement de capacité à l'émetteur et le récepteur comprend la transmission sur un canal hors bande différent de celui sur lequel l'émetteur et le récepteur communiquent l'un avec l'autre.

**12.** Procédé selon la revendication 8, dans lequel le message de notification de changement de capacité de réception est transmis avant le message de notification de changement de capacité d'émission.

**13.** Procédé selon la revendication 8, comprenant en outre la mise en mémoire tampon des données avant la promulgation d'un changement de débit de communication pour fournir un service ininterrompu.

**14.** Procédé selon la revendication 8, comprenant en outre:

compresser des cadres à l'émetteur avec des noueaux créneaux alloués immédiatement si le nouveaux créneaux horaires alloués ont une bande passante plus bas; et
compresser des cadres à l'émetteur avec des créneaux TDM précédemment alloués jusqu'à ce qu'un tampon soit se vide si les nouveaux créneaux horaires alloués ont une bande passante plus élevée.

FIG. 1

Notify receiver of capacity
change
202

Notify transmitter of capacity
change
204

Send EoT message from
transmitter
206

Configure transmitter with new
parameters
208

Configure receiver with new
parameters after receiving EoT
210

Send TP from transmitter
212

Send SoT from transmitter
214

Resume normal operation
216

FIG. 2

Determine change in TDM data
rates
302

Identify unused TDM slots
304

Replace unused TDM slots with
traffic from active clients
306

Transmit new schedule to
transponders
307

Stuff receiver client streams to
replicate full data rate
308

FIG. 3

| Processor 402 | Memory 404 |
| Transceiver 406 | State module 408 |

Centralized controller
112

FIG. 4